# FASCICULE DE BREVET EUROPEEN

(11) **EP 0 951 813 B1**
(45) Date de publication et mention de la délivrance du brevet: **12.11.2003**
(21) Numéro de dépôt: 99440084.4
(22) Date de dépôt: 20.04.1999
(51) Int. Cl.: A01B 63/102

(54) **Dispositif de support de machine utilisable notamment en agriculture, arboriculture et viticulture**
Geräteunterstützungsvorrichtung insbesondere für Landwirtschaft, Weinbau und Baumgärtnerei
Machine support device especially for agriculture, arboriculture and viticulture

(30) Priorité: 24.04.1998 EP 98440078
(43) Date de publication de la demande: 27.10.1999
(73) Titulaire: Binger France Sarl, 68127 Niederhergheim (FR)
(72) Inventeur: Andelfinger, Georges, 68127 Niederhergheim (FR)

(56) Documents cités:
- EP-A- 0 898 877
- DE-U- 29 707 421
- FR-A- 2 120 452
- FR-A- 2 604 858
- GB-A- 2 249 011
- US-A- 3 913 304
- US-A- 4 206 580

## Description

La présente invention porte sur un dispositif de support de machine utilisable notamment en agriculture, arboriculture et viticulture, selon le préambule de la revendication indépendante 1.

On sait que les machines mises en oeuvre par exemple pour les travaux de préparation du sol, de prétaille, de taille et de structuration des vignes, évoluent dans des environnements les plus divers, parfois même difficiles, du fait des reliefs des terrains et des états de ces derniers, des obstacles de toutes sortes, du défaut de parallélisme des interlignes, des différents types et hauteurs de vigne (avec ou sans palissage), etc.. En outre, la machine et le dispositif de support lui-même, en général agencés à l'avant du tracteur (dont le voie est déjà étroite), modifient plus ou moins sensiblement, selon le poids et la situation momentanée de la machine, la répartition des charges. Or, on sait qu'une mauvaise répartition de ces charges est source potentielle d'accidents. Pour être en mesure de prévenir ces derniers et les dommages qu'ils engendreraient, il convient donc d'être en mesure d'effectuer rapidement, à tous instants, les corrections nécessaires.

C'est dans ces conditions que l'opérateur est appelé fréquemment à adapter ou à régler la position de la machine, donc à faire mouvoir cette dernière dans un espace-plan défini, en général perpendiculaire au plan médian longitudinal du tracteur, la surface de balayage dans cet espace dépendant, par ailleurs, de la construction du dispositif de support (de machine), étant rappelé que ce dispositif de support est muni de moyens d'actionnement aptes à imprimer ou à transmettre à ladite machine les mouvements voulus. de moyens d'actionnement aptes à imprimer ou à transmettre à ladite machine les mouvements voulus.

Ces mouvements peuvent être décomposés dans les deux directions d'un système de coordonnées cartésiennes rectangulaires dont l'axe des abscisses serait parallèle au plan du sol. Plus généralement, on parlera de mouvements latéraux qui auront pour effet essentiellement d'éloigner ou de rapprocher la machine du plan médian du tracteur, et des mouvements en hauteur qui auront pour effet essentiellement de modifier sa distance par rapport au sol.

On connaît un dispositif de support répondant aux caractéristiques exposées dans le préambule mentionné en introduction, mais dont le fonctionnement n'est pas satisfaisant. En particulier, le déplacement latéral de la machine s'effectue en deux temps. Au cours du premier temps, l'opérateur fait pivoter le mât, ce qui entraîne la modification de l'assiette de la machine, cette dernière s'inclinant avec ledit mât auquel elle est fixée par l'intermédiaire d'un bras de maintien. Ce n'est que dans un deuxième temps que l'opérateur peut redresser la machine, en faisant actionner le bras de maintien, de sorte à donner à ladite machine, au moins approximativement, la même orientation qu'elle avait auparavant. Pour y arriver, il n'est pas rare que l'opérateur doive procéder par tâtonnements, donc répéter la double opération dont nous venons de faire état. Or, cette manière de procéder en deux temps est très désavantageuse à plus d'un titre. Ainsi, au cours de chaque intervention de l'opérateur visant à corriger la position latérale de la machine, cette dernière peut, à deux reprises successivement, provoquer de graves dommages au palissage (sectionnement de fils) et/ou aux ceps d'assiette. De plus, lorsque la machine est mise en oeuvre dans des parcelles à pentes prononcées, l'opérateur peut difficilement maîtriser la stabilité de l'ensemble (machine - dispositif de support - tracteur), aussi bien en phase de travail que lors des manoeuvres hors parcelles, du fait, d'une part, de la lenteur inhérente à ladite double opération et surtout, d'autre part, du fait que la surface de balayage est extrêmement réduite. En effet le mât ne peut osciller qu'entre une position de départ verticale ou approximativement verticale et une position de déport maxima située dans l'aire de travail. Cela notamment à raison de l'agencement de la machine (M) au bras de maintien relié audit mât. On observe sur le dispositif connu que, si le mât basculait au-delà ou à peine au delà de la verticale, dans le sens opposé à l'aire de travail, la machine entrerait en conflit avec ledit bras de maintien et le mât. Par conséquent, la machine reste déportée par rapport au tracteur même en position de retrait maxima, ce qui compromet l'équilibre de l'ensemble précité. D'ailleurs, selon le dévers des parcelles, ce dispositif de support connu ne peut être mis en oeuvre avec la sécurité voulue, du fait de ce deuxième inconvénient, les risques de basculement dudit ensemble, avec le cortège de dommages qu'un tel basculement entraînerait, étant trop grands. L'effet négatif de l'insuffisance d'effacement de la machine, c'est-à-dire de retrait de celle-ci vers le plan médian longitudinal au tracteur, à l'avant du tracteur, se manifeste également lors du transport ou des déplacements sur route. Enfin, l'agencement des moyens d'actionnement est tel que l'opérateur doit, en phase de travail, intervenir pratiquement après chaque déplacement latéral de la machine pour corriger la position de celle-ci en hauteur.

La demande de brevet GB - 2, 249,011 A divulgue un dispositif de support où deux vérins sont couplés de sorte que lorsqu'un bras est abaissé, l'autre est relevé et vice-versa. Mais d'abord, la structure du dispositif décrit est telle qu'une assiette ou une orientation définie de la machine reliée au dit dispositif n'est pas maintenue rigoureusement constante. Ensuite et surtout, ce type de structure est tout à fait inadapté pour la mise en oeuvre de machines notamment en viticulture. De plus, le processus de retrait de la machine vers l'avant du tracteur est compliqué et, là encore, non transposable dans le domaine d'application privilégié précité, en particulier du fait du poids assez important que présentent certaines d'entre elles. On relève dans ce contexte qu'au cours dudit retrait, la machine ne passe pas devant le dispositif de support. Aussi l'homme du métier ne trouve-t-il pas dans cette divulgation un enseignement ou même une suggestion de solution quant aux moyens techniques pour résoudre le problème tel qu'il est formulé infra.

EP - 0, 898,877 A1, qui est un état de la technique selon l'article 54(3) CbE montre un dispositif de support d'une effeuilleuse fixé à un tracteur. Il comprend un mât sur lequel peut coulisser, sur une distance, un manchon sous l'action d'un vérin s'étendant parallèlement au mât et un bras de soutien orienté perpendiculairement à ce mât. Le bras est relié par l'une de ses extrémités au manchon, l'autre extrémité permettant de recevoir l'effeuilleuse. Le mât est apte à pivoter autour d'un arbre situé à sa partie inférieure, de part et d'autre d'une position verticale et d'un angle limité chaque fois, sous l'action d'un vérin. Le bras est télescopique, l'action d'un vérin permettant de rapprocher ou d'écarter, sur une distance, l'effeuilleuse d'un rang de vigne. Celle-ci peut osciller autour d'un arbre monté sur le bras, sous l'action d'un vérin. Enfin, le bras lui-même peut pivoter vers le haut sous l'action d'un mécanisme roue-crémaillère reliée à un vérin. Les moyens de ce dispositif, tels qu'ils sont appelés à être mis en oeuvre, ne permettent pas de remédier aux inconvénients explicités plus haut et, partant, ne fournissent pas de solution au problème formulé infra.

D'ailleurs l'invention revendiquée ne porte aucunement sur ce problème, puisqu'il s'agit d'ajuster la tête de l'effeuilleuse à l'aide desdits moyens commandés par des capteurs de position montés sur l'effeuilleuse, en fonction de la densité de végétation du rang de vigne. En particulier, ces moyens ne permettent de rapprocher l'effeuilleuse du mât que de façon assez limitée et moins encore de faire passer celle-ci devant le mât. Cette antériorité ne contient aucune solution dudit problème, ni information ou même suggestion de moyens de nature à indiquer à l'homme du métier ou mettre celui-ci sur la voie d'une solution.

Le problème consiste donc à réaliser un support de machines de tous types utilisables notamment en viticulture, grâce auquel, d'une part, les mouvements de la machine se déroulent avec un maximum de rapidité et de confort pour l'opérateur (ce qui implique que les interventions de ce dernier sur les commandes des moyens d'actionnement soient aussi réduites en fréquence, rationnelles et simples que possible dans toutes les configurations (types de vignobles, relief, etc.), étant souligné qu'au cours des mouvements de la machine engendrés par les opérations de réglage / de positionnement de celle-ci, l'assiette et l'orientation de la machine doivent rester aussi invariantes que possible, ou varier seulement en fonction d'un schéma défini préalablement. Lesdites opérations doivent, par ailleurs, se dérouler avec une sécurité optimale en toutes circonstances, avec un minimum de porte-à-faux. D'autre part, dans le droit fil de la recherche de la sécurité d'utilisation, la machine, souvent équipée d'outils de coupe, doit pouvoir s'effacer au moins en grande partie et, de préférence, totalement vers l'avant du tracteur, de sorte qu'elle ne dépasse pas latéralement les dimensions hors tout dudit tracteur (ou que le dépassement éventuel subsistant soit réduit au minimum). On a vu que cet effacement est nécessaire lors de la mise en oeuvre de la machine sur des parcelles à fort dévers et lors du transport de celle-ci sur route, et qu'il présente de surcroît l'intérêt complémentaire d'assurer à l'ensemble (machine - dispositif de support - tracteur) un équilibre optimal. Enfin, cet effacement doit pouvoir s'effectuer dans un contexte, c'est-à-dire dans une aire aussi compacte que possible.

Le but de la présente invention est d'apporter une solution complète au problème posé. Il est atteint grâce aux moyens définis dans la revendication indépendante 1.

Les revendications dépendantes définissent des moyens particulièrement intéressants permettant de réaliser l'invention avec des avantages complémentaires et, de surcroît, à bon compte.

On va décrire maintenant en détail, à titre d'exemple non limitatif, une forme d'exécution du dispositif de support de machine selon l'invention, à l'appui des dessins annexés, où
la figure 1 est une représentation schématique du dispositif de support permettant d'expliciter notamment la coordination des pivotements du mât et du bras de maintien de la machine dans le cadre des mouvements latéraux de celle-ci,
la figure 2 montre schématiquement un dispositif de support avec quelques variantes d'exécution,
les figures 3A et 3B sont des représentations schématiques du dispositif de support permettant d'expliciter les particularités mises en oeuvre pour les mouvements de la machine dans le sens de la hauteur et le réglage de ces mouvements,
les figures 4A, 4B sont une vue de face et une vue de dessus respectivement, montrant la capacité de retrait de la machine grâce au dispositif de support, et
les figures 5A, 5B et 6 sont des perspectives, sous différents angles, d'une forme de réalisation préférée du dispositif de support.

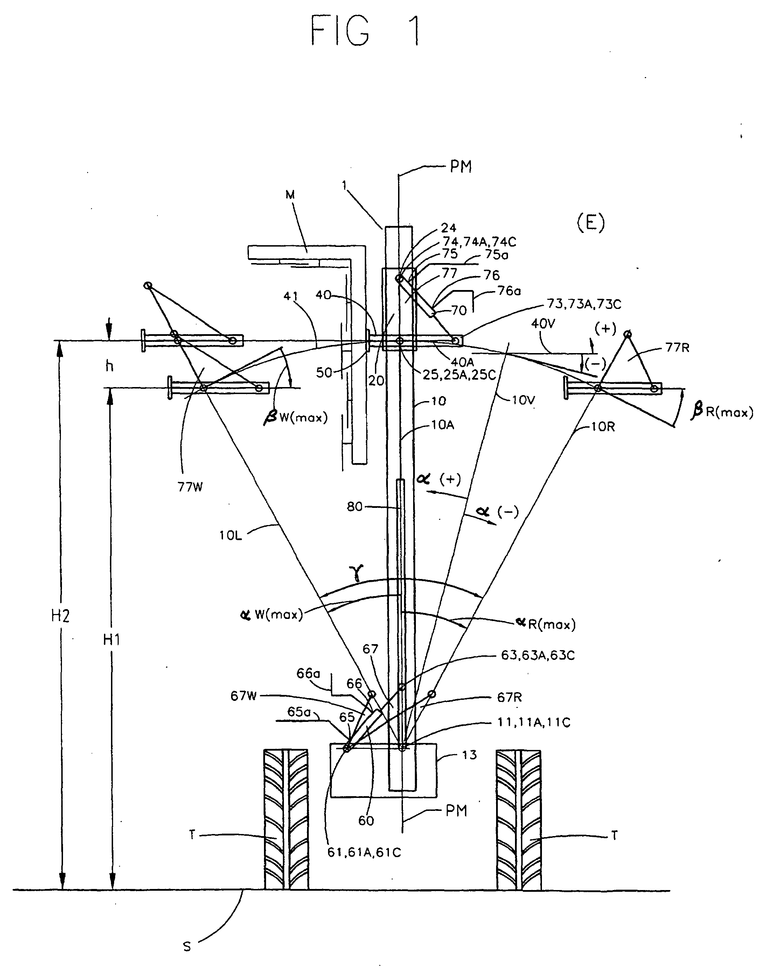

La figure 1 est une vue de face schématique d'une variante simplifiée du dispositif de support 1, l'observateur étant placé à l'avant d'un tracteur symbolisé par ses deux roues avant (référence T sur la figure) posées sur un sol S horizontal et par son plan médian longitudinal de trace PM.

Le dispositif 1 comprend un mât 10, d'axe 10A, dont la partie inférieure est noyée dans un support de mât ou caisson 13 et traversée par un arbre 11, d'axe 11A, porté par ledit caisson. Dans la partie supérieure du mât, on aperçoit une machine M fixée à un bras de maintien 40 par l'intermédiaire d'un dispositif 50 (en forme de plaque sur ce dessin), lequel bras 40 est relié à un manchon 20, coulissable le long du mât, par l'intermédiaire de moyens (non représentés sur la figure), moyens qui, selon une réalisation simplifiée, sont constitués d'une entretoise permettant le passage de la machine M devant ledit mât (10).

Le mât 10 peut pivoter autour de l'arbre d'articulation 11 grâce à un moyen d'actionnement 60, de préférence un vérin hydraulique 60 à double effet (ou vérin de mât). L'extrémité côté cylindre de vérin est articulée autour d'un arbre 61, d'axe 61A, solidaire du caisson 13, tandis que l'extrémité de la tige de vérin est articulée autour d'un arbre 63, d'axe 63A. Les axes 61A, 63A et 11A sont parallèles entre eux, les axes 61A, 11A formant un plan perpendiculaire à l'axe 10A, et l'axe 63A étant orthogonal à l'axe 10A.

Dans la figure 1, le mât 10 est représenté en position verticale, son axe 10 A se trouvant dans le plan PM (et dans un plan E orthogonal audit plan PM). Bien entendu, selon l'endroit exact d'agencement du dispositif de support à l'avant du tracteur, l'axe 10A peut, dans cette position verticale, ne pas se situer rigoureusement dans le plan PM, mais dans un autre plan parallèle à ce dernier. Par la suite, pour simplifier, on parlera de position verticale du mât 10 lorsque son axe est contenu dans le plan PM ou dans un plan parallèle à celui-ci, quel que soit le plan du sol (horizontal ou incliné). On voit qu'à partir de cette position verticale, l'aptitude au pivotement du mât est de grande ampleur, ce dernier pouvant osciller dans le sens positif (trigonométrique) ou négatif, de sorte que l'axe 10A peut balayer, rapporté au plan E, un secteur délimité par les demi-droites 10L ; 10 R ayant pour origine ou sommet le centre 11C (dans le plan E) de l'arbre 11 (observons que les éléments 11, 11A et 11C sont indiqués par un même trait de référence, présentation qui est adoptée pour d'autres groupes d'éléments sur cette figure et les figures suivantes, et que la lettre C, dans ces cas, symbolise un centre, c'est-à-dire l'intersection de l'axe en question avec le plan E). Les demi-droites 10L ; 10R forment un angle γ (qui constituera dans le même temps la référence du secteur précité) et correspondent aux positions extrêmes gauche et droite de l'axe 10A du mât 10. A titre d'illustration, en imaginant que la position momentanée de l'axe du mât soit celle référencée 10 V - position qu'il peut adopter grâce à l'entretoise mentionnée plus haut - l'opérateur peut écarter ou rapprocher la machine M du plan PM, donc en modifier la position latérale, en fonction des conditions de mise en oeuvre de ladite machine (voir flèches α (+) et α (-)).

Les positions extrêmes 10L, 10R de l'axe 10A du mât 10 (et par conséquent le secteur γ) sont également définies sur la figure 1 par le biais des angles de pivotement maxima, à partir de la position verticale du mât, dans le sens positif (α_{W} (max)) et dans le sens négatif (α_{R} (max)).

De fait, les moyens de distance (entretoise) permettent de décaler l'ancrage de la machine M au bras 40 suffisamment en avant du mât 10. Grâce à cette disposition, le mât peut également balayer le demi secteur droit (pivotement d'un angle α = 0 vers un angle α_{R} (max)), l'axe 10A pouvant passer de la position verticale à la position 10R et vice versa, sans que la machine M n'entre en conflit avec la mât 10.

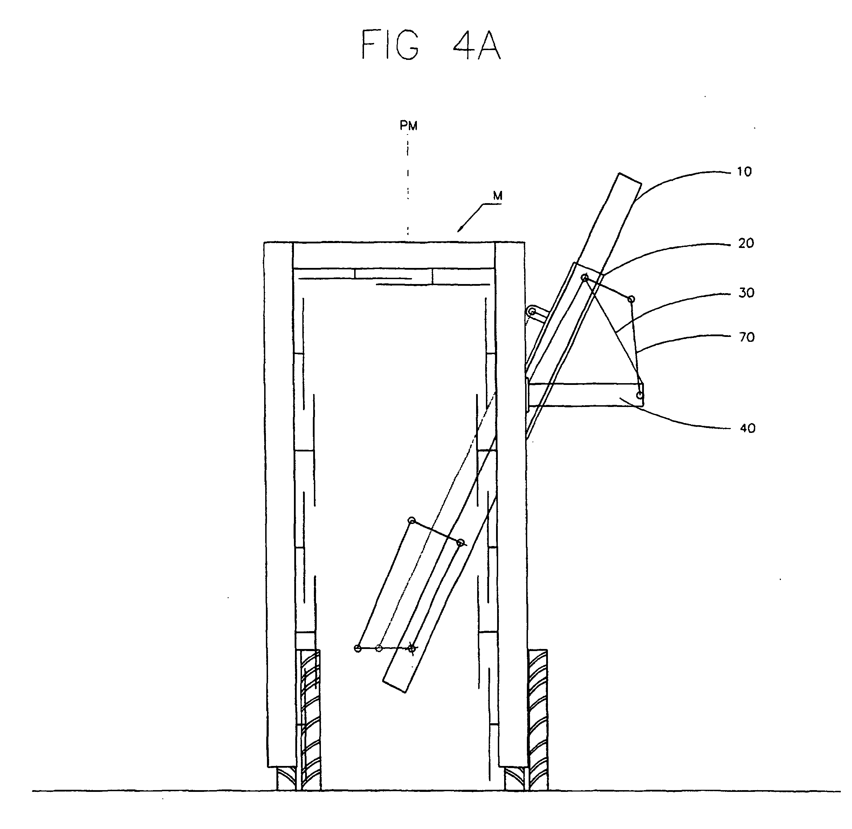

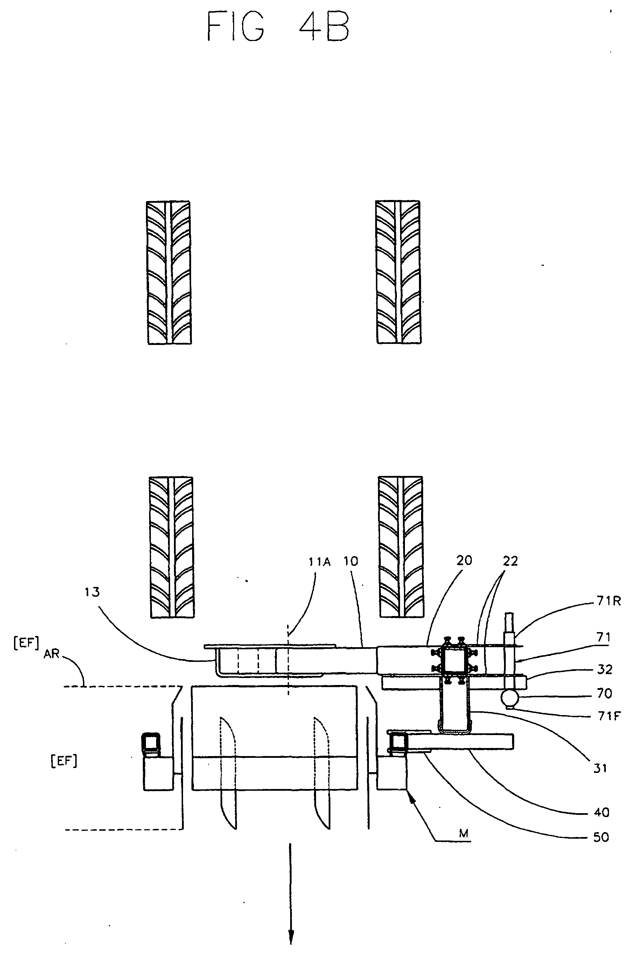

Le vérin 60 est disposé de manière que sa tige soit à mi-course lorsque le mât est en position verticale, afin que dans lesdites positions extrêmes, où la tige est en rétraction maxima et en extension maxima respectivement, on ait α_{w} (max) = α_{R} (max) = γ/2. Selon l'exemple les angles α_{w} (max) et α_{R} (max) sont compris dans une fourchette de [20 à 25°]. C'est dire que la valeur moyenne du secteur γ est de l'ordre de 45°. Ces déplacements latéraux extrêmement importants que cette valeur permet à la machine d'effectuer, sont tels que le dispositif de support peut être utilisé de façon universelle, même lorsque le poids de la machine est relativement important, dans les meilleures conditions de sécurité. Plus particulièrement, la grande amplitude de mouvement qu'il est possible d'imprimer à la machine permet "d'effacer" celle-ci totalement lors du transport sur route (voir aussi figures 4A, 4B).

Le bras de maintien 40 est agencé sur un tourillon 25, d'axe 25A (et de centre 25C) perpendiculaire à l'axe 10A, ce tourillon étant fixé ici dans la zone inférieure du manchon 20 et coopérant avec les moyens-entretoise évoqués plus haut (par exemple en les traversant). L'entretoise peut également être solidaire du manchon 20, le tourillon 25 étant alors fixé sur la face externe de ladite entretoise. Le bras 40 est relié à un moyen d'actionnement 70, de préférence un vérin hydraulique à double effet (ou vérin de bras). L'extrémité côté cylindre du vérin 70 est articulée autour d'un tourillon 24 fixé dans la zone supérieure du manchon 20, tandis que l'extrémité de la tige de vérin est articulée autour d'un arbre 73, d'axe 73A, agencé à l'extrémité droite dû bras 40 (c'est-à-dire à l'opposé du dispositif de maintien 50).

Les axes 73A, 25A sont parallèles entre eux et forment un plan perpendiculaire à l'axe 10A, lorsque le mât 10 est en position verticale. L'action du vérin 70 permet de faire pivoter le bras 40 autour du tourillon 25. Cette action est illustrée par les angles β (+) et β (-), à partir d'une position momentanée de l'axe du bras référencée 40V. Le mât 10, c'est-à-dire son axe 10A, pouvant balayer le secteur γ tel que défini plus haut, le lieu géométrique du centre 25C (projeté sur le plan E) du tourillon 25, autour duquel le bras 40 peut pivoter, est un arc de cercle 41 de centre 11C.

Le vérin 70 est disposé de manière que sa tige soit à mi-course lorsque le mât 10 est en position verticale, afin que dans les positions extrêmes, où la tige est en rétraction maxima et en extension maxima respectivement, on ait β_{R} (max) = β_{w} (max) (pivotement de l'axe 40A du bras 40 vers la position horizontale, à partir de la tangente à l'arc 41 au point 25C).

Les vérins 60 et 70 sont combinés de sorte que leurs actions concordent (on emploiera également la terminologie de vérins synchrones). Eu égard plus particulièrement à l'application du dispositif du support au domaine de la viticulture, cette concordance ou synchronisation est définie de sorte à atteindre l'objectif de l'invariance de l'assiette de la machine, quelle que soit l'inclinaison du mât.

Rappelons que les vérins 60 et 70 sont à double effet. Le vérin 60 présente une arrivée 65 pour l'extension et une arrivée 66 pour la rétraction de la tige. Par convention on adoptera ces mêmes références 65, 66 pour désigner aussi les chambres correspondantes, séparées par le piston à l'intérieur du cylindre de vérin. De manière analogue, le vérin 70 présente une arrivée 75 pour l'extension et une arrivée 76 pour la rétraction de la tige, la même convention relative aux références étant applicable.

Les arrivées 66 et 76 (côté tige), donc les chambres correspondantes sont reliées au moyen d'un flexible. Ces chambres et ledit flexible, ce dernier symbolisé par les flèches 66a, et 76a sur la figure, sont remplies d'huile, au moyen d'un système connu de remplissage et de purge (non représenté).

Les arrivées 65 et 75 (côté cylindre) sont branchées (branchement symbolisé par les flèches 65a et 75a) sur un même distributeur à double effet (non représenté), commandé par un seul levier de commande (non représenté).

Ainsi, les deux vérins 60 et 70 couplés se comportent en quelque sorte comme un seul vérin à double effet. Ce couplage permet et assure la mise en mouvement simultanée et instantanée des éléments mât et bras (et donc de la machine fixée à ce bras), ces mouvements étant commandés par l'opérateur de façon simple et rapide grâce à l'unique levier de commande précité. L'opérateur agit sur le distributeur pour actionner par exemple le vérin de mât 60 en mettant la pression dans l'arrivée 65 pour l'extension de la tige. La tige du vérin sort, faisant pivoter le mât dans le sens négatif. Simultanément un volume d'huile V₁ est chassé de la chambre 66 du vérin 60 vers et dans la chambre 76 du vérin de bas 70, ce qui entraîne une rétraction de la tige de ce vérin 70 et le pivotement du bras 40 dans le sens positif. De façon analogue, lorsque le vérin 70 est actionné en mettant la pression dans l'arrivée 75 pour l'extension de la tige, la tige du vérin 70 sort, faisant pivoter le bras dans le sens négatif.

Simultanément, un volume d'huile V₂ est chassé de la chambre 76 du vérin 70 vers et dans la chambre 66 du vérin 60, ce qui entraîne une rétraction de la tige de ce vérin 60 et le pivotement de mât dans le sens positif.

Selon la forme d'exécution décrite, les vérins 60 et 70 sont identiques et disposés de telle sorte qu'en position verticale du mât, les polygones référencés 67 et 77 sont identiques entre eux. Dans cette position (verticale du mât 10), de manière générale, les deux polygones formés chacun par la projection orthogonale du segment de droite reliant les deux centres d'articulation du vérin 60 ; 70 sur le plan (E), par la projection orthogonale de ce même segment de droite sur l'axe 10A et enfin par les deux segments de droite parallèles de projection eux-mêmes, sont égaux. En l'occurrence, les polygones sont des triangles, l'un des segments de droite de projection se réduisant à un point sur l'axe du mât. Le triangle 67 est formé par le segment de droite reliant les centres 11C, 61C, le segment de droite reliant les centres 61C, 63C et le segment de droite reliant les centres 63C, 11C. Le triangle 77 est formé par le segment de droite reliant les centres 25C, 73C, le segment de droite reliant les centres 73C, 74C et le segment de droite reliant les centres 74C, 25C.

Pour des raisons de construction, il est avantageux de disposer les vérins 60, 70 de façon alternée par rapport à l'axe 10A du mât (voir figures 1 et suivantes).

Le rapport de volume circulant de la chambre 66 dans la chambre 76 (et inversement) étant égal à un, la course de la tige dans un sens de l'un des vérins 60, 70 entraîne obligatoirement et en même temps une course identique de la tige de l'autre vérin 70, 60 dans le sens contraire.

Au cours des pivotements simultanés du mât 10 et du bras 40, la configuration des triangles 67 et 77 se modifie, tout en présentant un identité par rapport à l'axe 10A du mât : en imaginant l'axe 10A du mât dans deux positions successives différentes, l'une après pivotement dans le sens positif d'un angle α₁ à partir de la position verticale (position α₁ (+)), l'autre après pivotement dans le sens négatif d'un angle de même valeur α₁ à partir de la position verticale (position α₁ (-)), la configuration du polygone ou triangle en position α₁ (+) (non référencée) correspondra à la configuration momentanée du polygone en triangle en position α₁ (-) (non référencée). A titre d'illustration, on voit sur la figure, dans les positions extrêmes α_{W} (max) et α_{R} (max), le triangle 67_{W} qui correspond au triangle 77_{R} et le triangle 67_{R} qui correspond au triangle 77_{W}.

Grâce à ces caractéristiques, l'assiette de la machine reste toujours rigoureusement la même, une modification de l'angle α (pivotement du mât) dans un sens, s'accompagnant simultanément et en continu d'une modification de l'angle β dans le sens contraire (pivotement du bras), et vice versa avec |α| = |β| à tous instants, et, comme on vient de le dire, la course d'extension de la tige d'un vérin 60 ; 70 étant égale à la course de rétraction de la tige de l'autre vérin 70 ; 60. De plus, la manipulation est extrêmement aisée, l'opérateur n'ayant à agir que sur une seule manette de commande.

Si l'invariance de l'assiette de la machine constitue l'objectif privilégié pour la plupart des applications, il peut être souhaitable, dans des cas particuliers, par exemple en arboriculture, que l'assiette de la machine se modifie avec le pivotement du mât, non pas de façon imposée en suivant simplement et constamment l'orientation du mât (comme dans l'art antérieur), mais selon une définition voulue. On peut à cette fin prévoir par exemple un vérin de mât et un vérin de bras de mêmes sections, mais présentant des longueurs de tige différentes. Dans ce cas, conformément au couplage des chambres de cylindre tel que décrit plus haut, les angles de pivotement du mât et du bras ne sont plus reliés par une relation d'égalité (la fonction α = f(β) pouvant être déterminée). Une autre variante consisterait à prévoir des vérins de même longueur, mais de sections différentes. Dans ce cas, le rapport des volumes restant égal à un, la longueur de sortie de la tige d'un vérin est proportionnelle à la sortie de la tige de l'autre vérin, le facteur de proportionnalité étant égal au carré du rapport des rayons de chambres de cylindre. Une autre variante consisterait à combiner celles que nous venons d'évoquer (longueur de tiges différentes et sections différentes).

Les relations liant les angles de pivotement du mât et du bras de maintien étant déductibles mathématiquement dans chaque cas, on choisira celle permettant d'imprimer à la machine les variations voulues de l'assiette avec le pivotement du mât, et on définira les vérins appropriés.

Notons enfin que, si les vérins hydrauliques à double effet constituent des moyens d'actionnement privilégiés du mât et du bras, d'autres moyens peuvent être envisagés par l'homme de métier pour atteindre l'objectif de conservation de l'assiette de la machine lors et au cours du pivotement de l'un de ces éléments, ou de modification prédéterminée et voulue de ladite assiette ou orientation.

Une alternative est donnée, par exemple, par l'utilisation de deux moteurs électriques, l'un permettant de faire pivoter le mât, un autre le bras de maintien, la rotation de l'un des moteurs dans un sens entraînant automatiquement la rotation de l'autre en sens inverse, d'une valeur angulaire identique (en vue d'un maintien de l'assiette de la machine) ou d'une valeur angulaire différente, prédéterminée (en vue d'une correction voulue et prédéfinie de l'assiette de la machine). La mise en oeuvre de moyens d'actionnement de ce type apparaît cependant moins intéressante.

Le pivotement du mât (ou du bras) a nécessairement pour conséquence une variation en hauteur de la machine par rapport au sol. Cette variation est illustrée sur la figure 1 par la distance h (= H₂ - H₁). Selon les conditions de travail, il peut s'avérer indispensable qu'une telle variation doive être corrigée. A cette fin, l'opérateur fera coulisser le manchon sur une distance correspondante à ladite variation dans la direction adéquate (voir figure 1, lorsque l'axe 10A est en position 10L).

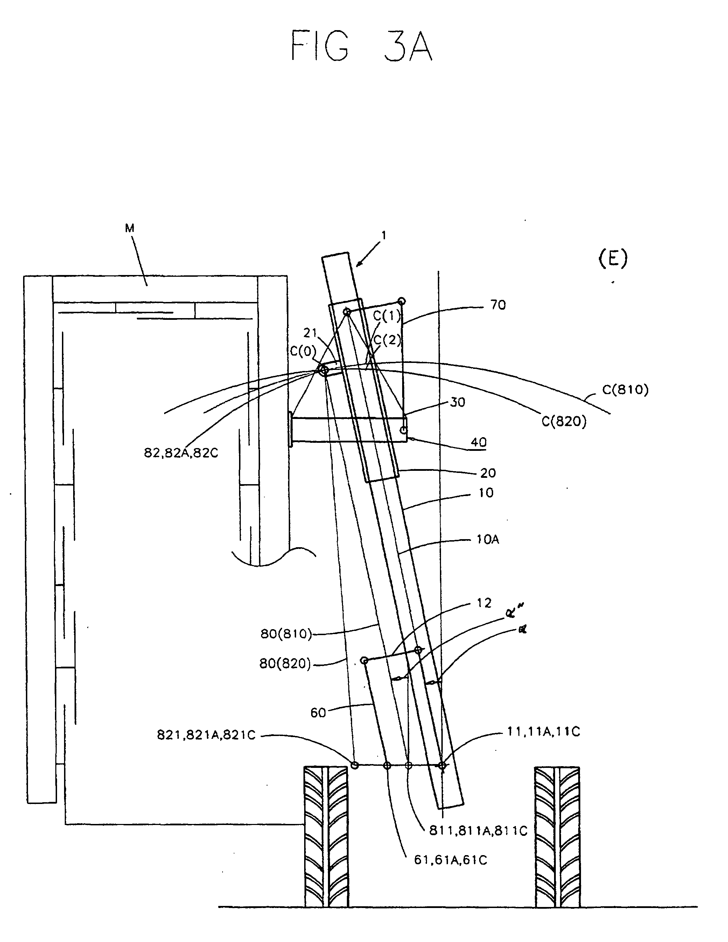

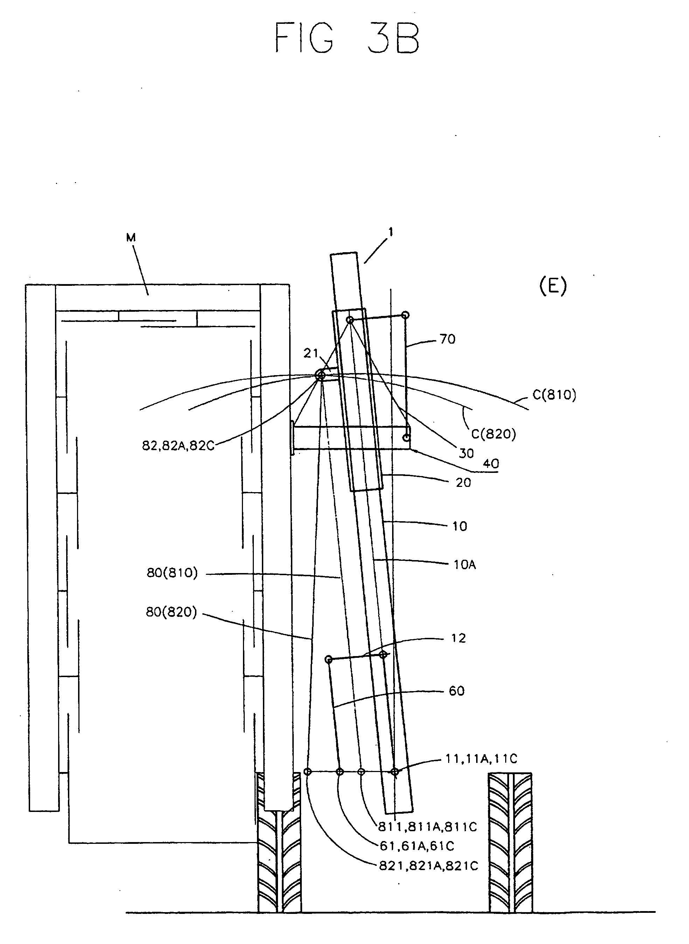

Le déplacement du manchon 20 résulte de l'action d'un moyen d'actionnement 80, de préférence un vérin hydraulique à double effet. Dans la variante représentée à la figure 1, le côté cylindre de ce vérin est relié à l'arbre 11 (ou sur un prolongement de celui-ci), le côté tige est relié à l'arbre 74 (ou sur un prolongement de celui-ci), l'axe du vérin 80 au moins approximativement confondu avec l'axe 10A du mât. Cette disposition du vérin du manchon présente le désavantage de faire intervenir relativement fréquemment l'opérateur en vue de modifier, c'est-à-dire d'adapter la distance séparant la machine du sol. Nous verrons plus loin, à l'appui des figures 3A et 3B, comment l'invention pallie à cet inconvénient.

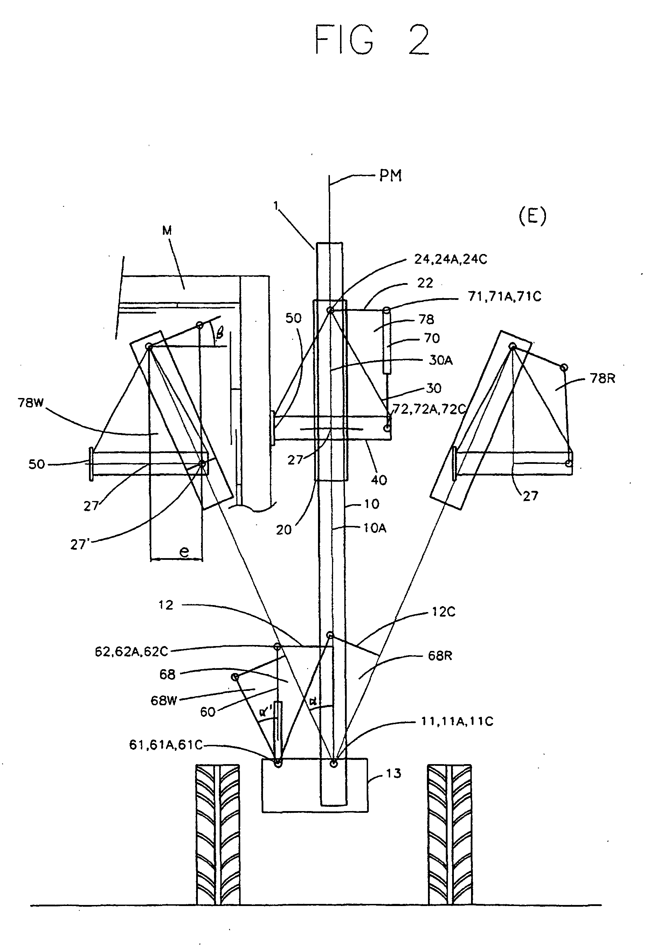

La figure 2 (où les dimensions de certains éléments sont modifiées, sans que cela n'affecte leur(s) fonctions(s)), montre d'autres caractéristiques intéressantes, les mêmes références ayant été reprises pour désigner les éléments identiques ou équivalents.

Le bras de maintien 40 est solidaire d'un balancier 30 (sur lequel on reviendra plus loin), symbolisé, dans cette représentation, par un triangle et une embase rectangulaire dont le périmètre est confondu avec celui du bras 40.

Les deux éléments, bras 40 et balancier 30 forment ainsi un ensemble pendulaire apte à pivoter autour du tourillon 24 agencé dans la zone supérieure du manchon (pour des raisons de simplicité, on a adopté la même référence que celle vue à l'appui de la figure 1, alors même que ce tourillon, dans cette variante, ne porte pas de tête du vérin 71).

En position verticale, les vérins 60, 70, s'étendent parallèlement à l'axe 10A dudit mât, les deux vérins étant avantageusement disposés, là aussi, de façon alternée par rapport à l'axe 10A. L'extrémité côté cylindre du vérin 60 peut s'articuler autour d'un arbre 61 (d'axe 61A et de centre 61C) monté dans le caisson 13, tandis que l'extrémité côté tige peut s'articuler autour d'un arbre 62 (d'axe 62A et de centre 62C) fixé à l'extrémité d'un support 12, selon l'exemple une paire de pattes de fixation 12 solidaire du mât 10. De manière analogue, l'extrémité côté cylindre du vérin 70 peut s'articuler autour d'un arbre 71 (d'axe 71A et de centre 71C) monté à l'extrémité d'un support 22, selon l'exemple une paire de pattes de fixation 22, tandis que l'extrémité côté tige peut s'articuler autour d'un arbre 72 (d'axe 72A et de centre 72C) agencé à l'extrémité droite du bras 40.

En position verticale du mât 10, aux triangles 67, 77 de la variante de la figure 1 correspondent des rectangles 68, 78 (ou des carrés selon notamment les dimensions des vérins 60, 70). Pour la définition générale du polygone, on se reportera aux explications données plus haut. Le rectangle 68 est formé par les segments de droite 11C, 12C, le segment de droite 12C, 62C, le segment de droite reliant les centres 62C, 61C, et le segment de droite reliant les centres 61C et 11C. Le rectangle 78 est formé par les segments de droite 24C, 27 (projection droite du centre 72C sur le plan de symétrie 30A du balancier), le segment de droite reliant les points 27, 72C, le segment de droite reliant les centres 72C, 71C et le segment de droite reliant les centres 71C, 24C. On observe que si le vérin 60 est rigoureusement parallèle à l'axe 10A en position verticale, ce parallélisme est légèrement faussé dans les autres positions du mât (α' > α, voir figure 2).

Toutes autres explications fournies à propos de la variante de la figure 1, synchronisation des vérins 60, 70, positionnement des tiges en position verticale du mât, mouvements latéraux de la machine et maintien de l'assiette de celle-ci au cours desdits mouvements, polygones et modification de la configuration de ceux-ci, angles α, β ; α_{W} (max), α_{R} (max) sont valables ici et peuvent être reprises "mutatis mutandis". desdits mouvements, polygones et modification de la configuration de ceux-ci, angles α, β ; α_{W} (max), α_{R} (max) sont valables ici et peuvent être reprises "mutatis mutandis".

Les figures 3A et 3B montrent le dispositif de support selon chaque fois une inclinaison définie, les deux inclinaisons ainsi représentées correspondant à des situations de travail très fréquentes. Mais le vérin de réglage en hauteur 80 de la machine M présente, à la différence de ce que l'on a vu avec la figure 1, l'originalité d'être décalé latéralement par rapport à l'axe 10A du mât 10.

Selon une première variante d'agencement, l'extrémité inférieure (c'est-à-dire côté cylindre) du vérin 80 (pour distinguer l'agencement, on désignera ce vérin également par la référence 810) est reliée à un arbre d'articulation 811, d'axe 811A, se situant entre l'arbre de pivotement 11 du mât et l'arbre 61 du vérin de mât, les axes 11A, 61A et 811A étant par ailleurs, selon l'exemple, dans un même plan horizontal.

Selon une seconde variante d'agencement, l'extrémité inférieure (côté cylindre) du vérin 80 (pour distinguer l'agencement, on désignera ce vérin également par la référence 820) est reliée à un arbre 821 d'axe 821A, se situant cette fois-ci à l'extérieur, c'est-à-dire à gauche de l'arbre 61 du vérin 60 (en regardant la figure), les axes 11A, 61A et 821A étant par ailleurs, selon l'exemple, dans un même plan horizontal.

Sont également dans un même plan, l'axe 10A et les axes (non référencés) des vérins 60 et 80 (810, 820). paire de pattes solidaire du manchon, ce support étant orienté du côté vers lequel l'arbre d'articulation inférieur 81 (811, 821) du vérin 80 (810, 820) est décalé, toute autre pouvant bien sûr être envisagée (par exemple, liaison de la tête du vérin 80 à un tourillon fixé directement sur le manchon 20).

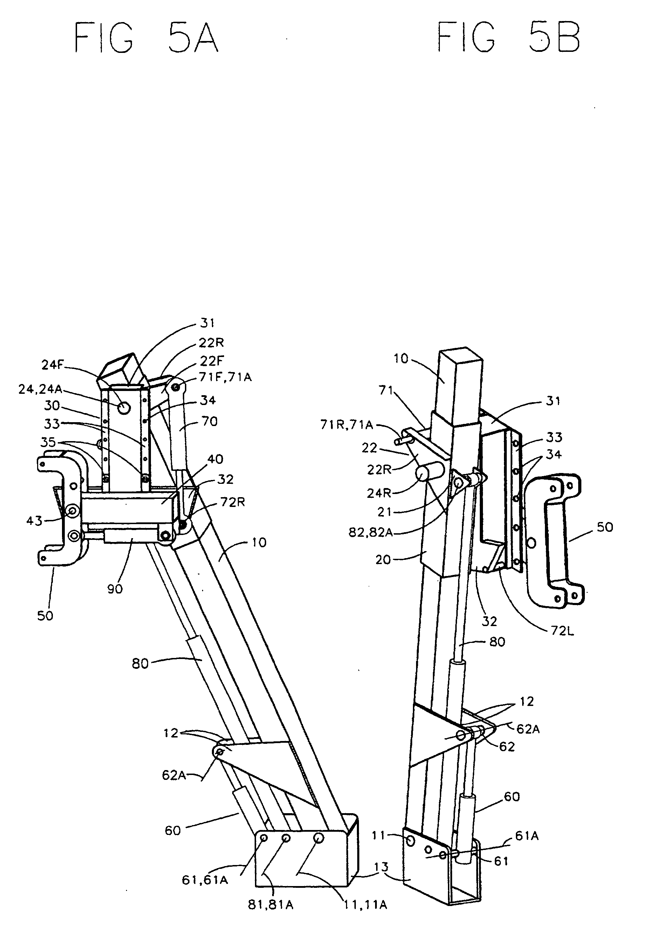

Selon la variante d'agencement correspondant au vérin 810, qui est également celle que nous verrons à l'appui des figures 5A et suivantes, ledit vérin s'étend parallèlement à l'axe 10A lorsque ce dernier est en position verticale. On observe (à l'instar du vérin 60 de la figure 2) que dans les autres positions du mât, ce parallélisme est légèrement faussé (α > α", voir figure 3A).

Dans tous les cas, un pivotement du mât entraîne un déplacement du manchon le long de ce dernier, le lieu géométrique du centre 82C de l'arbre 82 étant un arc de cercle C(810) ou C(820) de centre 811C ou 821C respectivement, selon la variante.

Cet agencement présente le grand avantage qu'une rectification ou un réglage de la hauteur de la machine par rapport au sol ne s'avère pratiquement plus nécessaire quand la position latérale de ladite machine est modifiée, du moins dans les conditions de travail les plus courantes.

On constate que lorsque la position latérale de la machine passe de celle représentée à la figure 3A à celle représentée par la figure 3B, le centre 82C de l'arbre 82 se déplace de C(0) vers C(1) (cf. figure 3A), lorsque le vérin 80 est monté selon la première variante (vérin 810), ce qui équivaut, après correction de l'échelle du dessin, à une différence de hauteur d'environ 20 mm (pour un rayon de 1430 mm). Lorsque le vérin 80 est monté selon la seconde variante (vérin 820), le centre 82C de l'arbre 82 se déplace de G(0) vers C(2), ce qui équivaut à une différence de hauteur sensiblement inférieure à 1 mm. (pour un rayon de 1406 mm.). Dans ces conditions, l'opérateur peut même régler la hauteur de la machine dès le départ dans une position normale ou courante de travail prévue, lorsque le mât 10 est en position verticale, la variation de hauteur de la machine par rapport au sol restant négligeable quand on modifie en conditions normales la position latérale de cette dernière. Une intervention de l'opérateur ne sera nécessaire que dans des cas particuliers. L'objectif de minimisation de la fréquence des manoeuvres de réglage en hauteur est donc atteint alors même que la précision, le confort et la sécurité d'utilisation de la machine, ainsi que la répartition des charges sont optimales.

Les autres caractéristiques décrites à l'appui de la figure 2 sont transposables ici.

Les figures 4A, 4B représentent le dispositif support - en vue de face à la figure 4A (à l'instar des figures 1 à 3) et de dessus à la figure 4B - le mât 10 étant basculé totalement vers la droite (l'axe 10A correspondant dans ce cas à l'axe 10R de la figure 1). La machine M se situe quasiment dans le prolongement du tracteur, son plan médian (non représenté) se confondant pratiquement avec le plan médian PM du tracteur.

Comme on le comprend à l'appui de la figure 4B, ce retrait total de la machine M est rendu possible grâce à l'élément 31 qui en déporte sa fixation au dispositif de maintien 40, 50 vers l'avant et qui permet de la faire évoluer dans un espace-plan {E_{F}} dont la limite arrière {E_{F}}_{AR} s'étend avec un jeu suffisant devant les faces avant (non référencée) du caisson 13 et du mât 10 pivotable autour de l'axe 11A (les moyens d'actionnement 60 et 80 n'étant pas représentés sur la figure 4B).

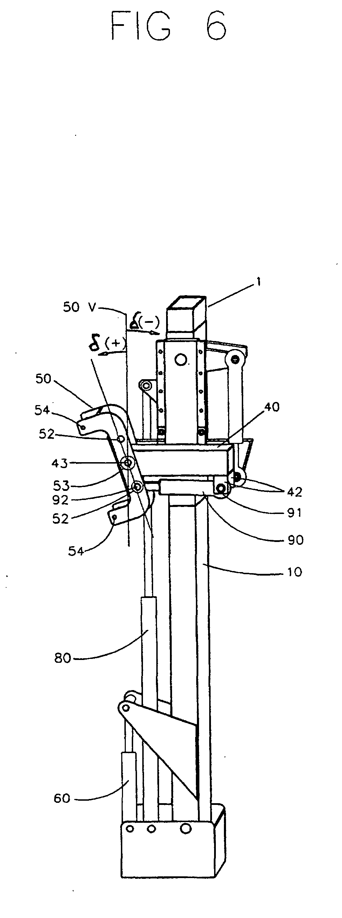

De manière avantageuse, l'élément 31 fait partie d'un ensemble balancier (de référence générale 30) représenté en détail dans les figures 5A, 5B, 6.

Dans les figures 5A et 5B, le dispositif de support est représenté tel que l'observateur l'aperçoit lorsqu'il est placé face au tracteur (figure 5A) et à côté du tracteur, à droite de celui-ci, en regardant dans le sens de marche (figure 5B), respectivement, l'inclinaison du mât 10 vers la gauche correspondant à la situation où la machine M (non représentée sur ces figures) est mise en oeuvre pour des travaux de coupe par exemple. La figure 6 montre le dispositif dans sa position verticale, l'observateur étant placé face au tracteur, à l'avant de celui-ci.

Le mât 10 est constitué d'un tube robuste à section carrée, pivotable comme on l'a vu, autour de l'arbre 11 d'axe 11A, grâce à l'action du vérin 60.

La longueur du tronçon sur lequel le manchon 20 peut coulisser le long du mât est définie par la longueur de la tige du vérin 80 ce tronçon s'étendant d'une zone supérieure (telle que représentée sur ces figures) à une zone inférieure et vice-versa, le vérin étant articulable autour des arbres 81, 82, tenus par le caisson 13 et le support 21 respectivement. Selon la forme d'exécution présentée, le vérin 80 est disposé entre le mât 10 et le vérin 60 (disposition référencée 810 dans les figures 3A et 3B). Lors du pivotement du mât autour de l'axe 11A, en l'absence d'actionnement de la tige du vérin 80, la distance entre les axes 81A et 82A restant inchangée, le manchon 20 coulisse sur le mât en fonction du lieu géométrique référencé C (810) du point C(0) (voir figure 3A) (rappel étant fait que l'axe du vérin 80 n'est rigoureusement parallèle à l'axe 10A du mât qu'en position verticale de ce dernier).

Le manchon 20 comporte encore dans la zone supérieure le support 22, dont l'orientation est opposée à celle du support 12. Sur le support 22 (pattes de fixation) sont fixés le tourillon de référence générale 24 et l'arbre d'articulation de référence générale 71, de l'une des têtes de vérin 70. La paire de pattes 22 est constituée d'une plaque avant 22F portant un tourillon avant 24F et d'une plaque arrière 22R, portant un tourillon arrière 24R, tandis que les extrémités de ces plaques se dégageant du manchon 20 sont reliées par l'arbre 71, lequel se prolonge, de part et d'autre des plaques, d'une partie 71F à l'avant et d'une partie 71 R à l'arrière.

Le manchon 20 comporte enfin l'ensemble pendulaire 30, 40 (formé par le balancier et le bras de maintien respectivement, ce dernier étant pourvu de la fourche 50).

Le balancier a été représenté de façon schématique dans les figures 2, 3A, 3B, 4A, par un triangle et une embase rectangulaire d'axe, dont le plan de symétrie 30A, se situe, selon l'exemple, dans le plan PM (en position verticale du mât 10 (cf. figure 2)).

Selon la forme d'exécution décrite et présentée dans les figures 5A et suivantes, le balancier 30 comprend l'élément 31 (on a repris ici la même référence que celle désignant la variante simplifiée de pièce entretoise, alors que sa conformation n'est pas nécessairement identique), en forme de tube selon l'exemple d'exécution décrit, une plaque d'assise arrière 32 placée en regard du mât 10 et sur laquelle la partie arrière de l'élément 31 peut prendre appui, et une assise 33, en l'occurrence des cornières de fixation fixées sur la partie avant de l'élément 31, ces comières présentant une série de perçages superposés, de sorte à pouvoir y monter le bras 40 avec des moyens de fixation 35 à une hauteur choisie selon le type de machine et/ou les opérations à effectuer. L'assise arrière 32 présente approximativement la forme d'un T renversé. Dans la zone terminale droite et gauche de la branche horizontale de ce T est fixé un arbre 72R et 72L respectivement.

La construction présente la particularité d'être réversible, c'est-à-dire que le balancier peut être monté à l'avant du mât 10, sur le tourillon 24F (comme c'est le cas sur les figures 5A et suivantes), ou à l'arrière, sur le tourillon 24R.

Selon le mode de montage, le vérin 70 est agencé sur les arbres 71F, 72R (agencement à l'avant du mât 10, figures 5A, 5B, 6) ou sur les arbres 71R, 72L (agencement du balancier à l'arrière du mât).

De fait, selon le type de machine que l'on souhaite mettre en oeuvre, il peut être préférable de monter celle-ci à l'avant du mât (ainsi en est-il, par exemple, des rogneuses, des épampreuses et des effeuilleuses) ou au contraire à l'arrière du mât (par exemple les releveuses et les prétailleuses). Bien entendu, selon une version sans balancier, le bras 40 pourrait être monté de façon analogue, sur un tourillon 24F ou 24R, la pièce 31 se réduisant à un simple élément de distance.

On a vu que le bras de maintien 40 peut être fixé sur les cornières 33 du balancier 30 entre une position basse (figure 5A à 6) et une position haute. Le "montage bas" peut s'avérer avantageux, selon le genre de machine M utilisée (taille, traitement des sols, nature des vignes (basses ou hautes), etc.).

De manière générale, le balancier 30 permet de bénéficier d'une translation optimale de la machine M, comme ont peut l'apercevoir à l'appui de la figure 2 : dans la position du mât en phase de travail, le point 27 du bras 40 serait, en l'absence du balancier, en 27'. En l'occurrence, le bénéfice en translation est visualisé par la distance e.

La figure 6 montre le dispositif de support 1 dans sa position verticale. Le bras 40 présente, à gauche en regardant le dispositif de face, la fourche 50 destinée à maintenir la machine M (non représentée ici) et, à droite, (un support 42, selon l'exemple) des pattes 42 orientées vers la bas. Au-dessous du bras 40 s'étend, parallèlement à lui, un vérin de dévers 90 à double effet. Le vérin 90 est tenu, côté cylindre, par un arbre d'articulation 91 tenu par le support 42 et, côté tige, par un arbre d'articulation 92 porté par la fourche 50. La fourche est montée sur le bras 40 avec une aptitude ou pivotement autour d'un arbre 43.

Ainsi, l'actionnement du vérin 90 permet de modifier ponctuellement, dans des situations particulières, l'assiette de la machine M (voir sur cette figure 6 la représentation schématique du pivotement, angles δ(+) et δ(-) autour d'un axe vertical 50V).

On remarque que la fourche présente, de part et d'autre d'un alésage 53 par lequel passe l'arbre de pivotement 43, un alésage désigné uniformément par la référence 52. L'arbre 92 peut être monté dans l'un ou dans l'autre des alésages 52, selon le type de montage choisi (balancier à l'avant ou à l'arrière du mât 10). On note enfin que la fourche comporte des trous 54 permettant le passage des moyens de fixation de la machine.

Grâce aux moyens de l'invention, le dispositif de support de machine est d'une grande maniabilité, offre confort et simplicité d'utilisation. La machine peut être mise en oeuvre Grâce aux moyens de l'invention, le dispositif de support de machine est d'une grande maniabilité, offre confort et simplicité d'utilisation. La machine peut être mise en oeuvre notamment dans tous types de vignobles, dans les conditions les plus difficiles et les plus variées, mais aussi transportée d'un endroit à un autre en empruntant les routes, chaque fois avec un maximum de sécurité.

## Revendications

1. Dispositif de support de machine (M) utilisable notamment en agriculture, arboriculture et viticulture, comportant un mât (10), d'axe (10A), équipé d'un bras de maintien (40) de ladite machine et un support de mât (13) pour relier le dispositif à un tracteur (T),
ledit mât et ledit bras de maintien étant susceptibles de pivoter autour d'arbres (11 ; 24) d'axes (11A ; 24A) sous l'action de moyens (60 ; 70) respectivement pour constituer ainsi deux ensembles pivotables permettant à la machine (M) d'effectuer des mouvements latéraux ayant pour effet de la rapprocher ou de l'éloigner d'un plan médian (PM) du tracteur (T), le bras de maintien (40) pouvant en outre être en liaison avec un manchon (20) coulissable le long du mât (10) sous l'action de moyens (80), de sorte à pouvoir faire varier la distance séparant la machine (M) du sol, **caractérisé en ce que** les actions des moyens (60 ; 70) sont synchrones, un pivotement du mât (10) d'une valeur angulaire α dans un sens entraînant automatiquement un pivotement du bras de maintien (40) d'une valeur angulaire β dans le sens inverse, et vice-versa, cette synchronisation assurant le respect d'une relation prédéfinie entre lesdites valeurs angulaires α et β, de sorte qu'à chaque position du mât (10) correspond une orientation prédéfinie de la machine (M) et vice-versa et **en ce que** le bras de maintien (40) est relié à un moyen (31 ; 30) agencé entre ledit bras et le mât (10) grâce auquel la machine (M) peut évoluer entre des positions de déport et de retrait dans un espace-plan (E_{F}) s'étendant à l'avant du mât (10), de sorte qu'en position de retrait maxima, la machine (M) est disposée essentiellement dans le prolongement du tracteur.

2. Dispositif de support selon la revendication 1, **caractérisé en ce que** le moyen (31) est une pièce de distance ou entretoise.

3. Dispositif de support selon la revendication 1, **caractérisé en ce que** le moyen (30) est un balancier pouvant pivoter autour de l'arbre (24) et comprenant une entretoise (31) de préférence tubulaire, une assise arrière (32) disposée en regard du mât (10) et une assise avant (33) destinée à recevoir le bras (40).

4. Dispositif de support selon la revendication 3, **caractérisé en ce que** le balancier (30) peut être agencé à l'avant ou à l'arrière du mât (10), l'arbre (24) comprenant un tourillon avant (24F) et un tourillon arrière (24R).

5. Dispositif selon la revendication 4, **caractérisé en ce que** l'arbre (24 ; 24F ; 24R) est agencé dans la zone supérieure du manchon 20.

6. Dispositif de support selon la revendication 1 à 5, **caractérisé en ce que** le manchon (20) comporte des éléments support (22) portant un arbre (71), ce dernier se prolongeant avantageusement d'un tourillon (71F) vers l'avant et d'un tourillon (71R) vers l'arrière, de part et d'autre des éléments support (22).

7. Dispositif de support selon la revendication 6, **caractérisé en ce que** les éléments support (22) sont agencés dans la zone supérieure du manchon (20).

8. Dispositif de support selon l'une des revendications 3 à 7, **caractérisé en ce que** l'assise avant (33) est conformée de sorte à pouvoir y fixer le bras (40) à différentes hauteurs.

9. Dispositif de support selon l'une des revendications 3 à 8, **caractérisé en** que l'assise arrière (32) présente approximativement la forme d'un T renversé.

10. Dispositif de support selon la revendication 9, **caractérisé en ce que** dans la zone terminale droite et gauche de la branche horizontale du T de l'assise (32) est fixé un arbre 72R et 72L respectivement.

11. Dispositif de support selon la revendication 10, **caractérisé en ce que** le moyen d'actionnement (70) est relié soit aux arbres (71F, 72R), soit aux arbres (71R, 72L), selon que le balancier (30) est agencé à l'avant ou à l'arrière du mât (10).

12. Dispositif de support selon l'une des revendications 1 à 11, **caractérisé en ce que** le bras de maintien (40) comporte un moyen d'ancrage (50) sur lequel peut être fixée la machine (M), ce moyen d'ancrage pouvant pivoter autour d'un arbre (43) sous l'action d'un vérin de dévers (90).

13. Dispositif de support selon la revendication 12, **caractérisé en ce que** le vérin (90) est relié, d'une part, à un arbre (91) porté par des éléments (42), solidaires du bras (40) et, d'autre part, à un arbre (92), porté par le moyen d'ancrage (50), ledit vérin (90) s'étendant parallèlement au bras (40).

14. Dispositif de support selon la revendication 13, **caractérisé en ce que** le moyen d'ancrage (50) présente un alésage (52) de part et d'autre d'un alésage central (53) dans lequel est monté l'arbre d'articulation (43), le moyen d'ancrage (50) étant réversible.

15. Dispositif de support selon l'une des revendications 12 à 14, **caractérisé en ce que** le moyen d'ancrage (50) présente la forme d'une fourche.

16. Dispositif de support selon l'une des revendications 1 à 15, **caractérisé par le fait que** l'orientation de la machine (M) demeure inchangée lors du pivotement du mât (10) ou du bras (40), la relation entre les angles α, β obéissant à l'identité α = β.

17. Dispositif de support selon la revendication 16, **caractérisé en ce que** les moyens d'actionnement (60 ; 70) sont des vérins à double effet, que les arrivées (66 ; 76) pour la rétraction de la tige des vérins sont reliées entre elles et que les arrivées (65 ; 75) pour l'extension de la tige des vérins sont branchées sur un même distributeur commandé par une même manette.

18. Dispositif de support selon la revendication 17, **caractérisé en ce que** les vérins (60 ; 70) sont identiques, de sorte que lors de leur actionnement, la course d'extension de la tige de l'un d'eux est égale à la course de rétraction de la tige de l'autre.

19. Dispositif de support selon la revendication 17 ou 18, **caractérisé en ce que** les vérins (60 ; 70) sont disposés de manière alternée par rapport au mât (10).

20. Dispositif de support selon la revendication 17, 18 ou 19, **caractérisé en ce qu'**en position verticale du mât (10) les deux polygones formés chacun par la projection orthogonale sur un plan (E) perpendiculaire au plan (PM), du segment de droite reliant les deux centres d'articulation du vérin (60 ; 70), de ce même segment de droite sur l'axe 10A, et des deux segments de droite parallèles de projection eux-mêmes, sont égaux.

21. Dispositif de support selon la revendication 20, **caractérisé en ce que** la forme géométrique des polygones est de forme soit rectangulaire ou carré, les vérins (60 ; 70) s'étendant parallèlement à l'axe (10A) du mât (10), soit autre que rectangulaire ou carrée, les vérins (60 ; 70) ne s'étendant pas parallèlement à l'axe (10A).

22. Dispositif de support selon l'une des revendications 17 à 21, **caractérisé en ce que** le vérin (60) est relié, d'une part, à un arbre (61) porté par le support (13) et, d'autre part, à un arbre (62) porté par des éléments support (12) solidaires du mât (10).

23. Dispositif de support selon l'une des revendications 1 à 22, **caractérisé en ce qu'**un axe (81A) d'un arbre d'articulation inférieur (81) du moyen d'actionnement (80) est décalé latéralement d'une distance définie de l'axe d'articulation (11A) du mât (10), les arbres (81, 11) étant portés par le support de mât (13).

24. Dispositif de support selon l'une des revendications 1 à 23, **caractérisé en ce qu'**un axe (82A) d'un arbre d'articulation supérieur (82) du moyen d'actionnement (80) est décalé latéralement d'une distance définie de l'axe (10A) du mât (10).

25. Dispositif de support selon la revendication 24, **caractérisé en ce que** l'arbre d'articulation supérieur (82) du moyen d'actionnement (80) est porté par des éléments (21) solidaires du manchon (20).

26. Dispositif de support selon l'une des revendications 1 à 25, **caractérisé en ce que** dans la position verticale du mât (10), le moyen d'actionnement (80) s'étend parallèlement à l'axe (10A) dudit mât.

27. Dispositif de support selon l'une des revendications 1 à 26, **caractérisé en ce que** l'axe (10A) du mât (10) et les axes des vérins (60 ; 80) sont situés dans un même plan.

28. Dispositif de support selon l'une des revendications 1 à 27, **caractérisé en ce que** le moyen d'actionnement (80) est un vérin double effet.

## Claims

1. Machine support device (M) for use in particular in agriculture, arboriculture and wine growing, including a mast (10) with axis (10A) equipped with a support arm (40) for holding the said machine and with a mast support (13) to link the device to a tractor (T), the said mast and the said support arm being liable to pivot around spindles (11; 24) with axes (11A; 24A) operated respectively by means (60;70) to thus constitute two pivotable assemblies allowing the machine (M) to make lateral movements with the effect of bringing it closer to or moving it further away from a median plane (PM) of the tractor (T), with it also being possible that the support arm (40) be connected to a sleeve (20) that can slide along the mast (10) operated by means (80), so that the distance separating the machine (M) from the ground can be varied, **characterised in that** the actions of the means (60; 70) are synchronous, with a pivoting of the mast (10) of an angular value α in one direction automatically causing a pivoting of the support arm (40) of an angular value β in the opposite direction, and vice versa, this synchronisation guaranteeing the respecting of a predefined relationship between the angular values α and β, so that to each position of the mast (10) corresponds a predefined orientation of the machine (M) and vice versa and **in that** the support arm (40) is linked to a means (31; 30) fitted between the said arm and the mast (10) by means of which the machine (M) may move between the offset and retract positions in a two-dimensional space (E_{F}) extending at the front of the mast (10), so that in the maximum retract position, the machine (M) is placed essentially in extension of the tractor.

2. Support device according to claim 1, **characterised in that** the means (31) is a distance piece or spacer.

3. Support device according to claim 1, **characterised in that** the means (30) is a swinging arm able to pivot around the spindle (24) and including a spacer (31), preferably tubular, a rear base-plate (32) placed against the mast (10) and a front base-plate (33) intended to receive the arm (40).

4. Support device according to claim 3, **characterised in that** the swinging arm (30) can be fitted onto the front or the rear of the mast (10), the spindle (24) including a front pivot pin (24F) and a rear pivot pin (24R).

5. Device according to claim 4, **characterised in that** the spindle (24; 24F; 24R) is fitted to the upper part of the sleeve 20.

6. Support device according to claims 1 to 5, **characterised in that** the sleeve (20) includes support elements (22) bearing a spindle (71), the latter being prolonged expediently by a pivot pin (71F) at the front and a pivot pin (71R) at the rear, on either side of the support elements (22).

7. Support device according to claim 6, **characterised in that** the support elements (22) are fitted onto the upper part of the sleeve (20).

8. Support device according to one of the claims 3 to 7, **characterised in that** the front base-plate (33) is adapted so that the arm (40) may be fixed on it at different heights.

9. Support device according to one of the claims 3 to 8, **characterised in that** the rear base-plate (32) has approximately the shape of an upside down T.

10. Support device according to claim 9, **characterised in that** in the right and left-hand end areas of the horizontal branch of the T of the base-plate (32) are fixed spindles 72R and 72L respectively.

11. Support device according to claim 10, **characterised in that** the means of operation (70) is linked either to the spindles (71F, 72R), or to the spindles (71R, 72L) depending on whether the swinging arm (30) is fitted to the front or the rear of the mast (10).

12. Support device according to claims 1 to 11, **characterised in that** the support arm (40) includes a means of anchorage (50) onto which the machine (M) may be fixed, this means of anchorage being able to pivot around a spindle (43) operated by an incline-controlling cylinder (90).

13. Support device according to claim 12, **characterised in that** the cylinder (90) is linked, on the one hand, to a spindle (91) borne by elements (42) integral with the arm (40) and, on the other hand, to a spindle (92), borne by the means of anchorage (50), the said cylinder (90), extending parallel to the arm (40).

14. Support device according to claim 13, **characterised in that** the means of anchorage (50) has a bore (52) on either side of a central bore (53) in which is mounted the hinge spindle (43), the means of anchorage (50) being reversible.

15. Support device according to one of the claims 12 to 14, **characterised in that** the means of anchorage (50) has the shape of a fork.

16. Support device according to one of the claims 1 to 15, **characterised by** the fact that the orientation of the machine (M) remains unchanged when the mast (10) or arm (40) pivots, the relationship between the angles α and β being α = β.

17. Support device according to claim 16, **characterised in that** the means of actuation (60; 70) are double-acting cylinders, that the inlets (66; 76) for the retraction of the cylinder rods are connected to each other and that the inlets (65; 75) for the extension of the cylinder rods are connected to the same distributor controlled by the same lever.

18. Support device according to claim 17, **characterised in that** the cylinders (60; 70) are identical, so that when they are actuated, the extension stroke of the rod of one of them is equal to the retraction stroke of the rod of the other.

19. Support device according to claim 17 or 18, **characterised in that** the cylinders (60; 70) are positioned alternately in relation to the mast (10).

20. Support device according to claim 17, 18 or 19, **characterised in that** in the vertical position of the mast (10) the two polygons formed each formed by the orthogonal projection on a plane (E) perpendicular to the plane (PM), of the line segment linking the two articulation centres of the cylinder (60; 70), of this same line segment on the axis 10A, and of the two parallel projection line segments themselves, are equal.

21. Support device according to claim 20, **characterised in that** the geometric shape of the polygons is either rectangular or square, the cylinders (60; 70) extending parallel to the axis (10A) of the mast (10), or other than rectangular or square, the cylinders (60; 70) not extending parallel to the axis (10A).

22. Support device according to one of the claims 17 to 21, **characterised in that** the cylinder (60) is linked, on the one hand, to a spindle (61) borne by the support (13) and, on the other hand, to a spindle (62) borne by support elements (12) integral with the mast (10).

23. Support device according to one of the claims 1 to 22, **characterised in that** an axis (81A) of a lower hinge spindle (81) of the means of actuation (80) is offset laterally by a defined distance from the axis of articulation (11A) of the mast (10), the spindles (81, 11) being borne by the mast support (13).

24. Support device according to one of the claims 1 to 23, **characterised in that** an axis (82A) of an upper hinge spindle (82) of the means of actuation (80) is offset laterally by a defined distance from the axis (10A) of the mast (10)

25. Support device according to claim 24, **characterised in that** the upper hinge spindle (82) of the means of actuation (80) is borne by elements (21) integral with the sleeve (20).

26. Support device according to one of the claims 1 to 25, **characterised in that** in the vertical position of the mast (10), the means of actuation (80) extends parallel to the axis (10A) of the said mast.

27. Support device according to one of the claims 1 to 26, **characterised in that** the axis (10A) of the mast (10) and the axes of the cylinders (60; 80) are situated in the same plane.

28. Support device according to one of the claims 1 to 27, **characterised in that** the means of actuation (80) is a double-acting cylinder.

## Patentansprüche

1. Trägervorrichtung für eine Maschine (M), die insbesondere in der Landwirtschaft, in der Baumzucht und im Weinbau anwendbar ist, die einen Mast (10) mit Achse (10A) umfasst, ausgerüstet mit einem Haltearm (40) der besagten Maschine und einem Mastträger (13), um die Vorrichtung mit einem Traktor (T) zu verbinden, wobei sich der besagte Mast und der besagte Haltearm unter der Wirkung von Hilfsmitteln (60; 70) rund um Wellen (11; 24) von Achsen (11A; 24A) drehen können und so zwei schwenkbare Vorrichtungen bilden, mit denen die Maschine (M) seitliche Bewegungen ausführen kann, die zur Wirkung haben, die Maschine an eine Medianebene (PM) des Traktors (T) anzunähern oder davon zu entfernen, wobei der Haltearm (40) ferner in Verbindung mit einer unter der Wirkung von Hilfsmitteln (80) entlang dem Mast (10) verschiebbaren Muffe (20) sein kann, so dass der Abstand zwischen Maschine (M) und Boden verändert werden kann, wobei diese Vorrichtung **dadurch gekennzeichnet ist, dass** die Wirkungen der Hilfsmittel (60; 70) synchron sind, wobei ein Schwenken des Mastes (10) um einen Winkel α in eine Richtung automatisch ein Schwenken des Haltearms (40) um einen Winkel β in Gegenrichtung und umgekehrt hervorruft und diese Synchronisierung die Beachtung eines vordefinierten Verhältnisses zwischen den besagten Winkelwerten α und β gewährleistet, so dass jeder Position des Masts (10) eine vordefinierte Ausrichtung der Maschine (M) entspricht und umgekehrt und dadurch, dass der Haltearm (40) mit einem Hilfsmittel (31, 30) verbunden ist, das zwischen dem besagten Arm und dem Mast (10) angeordnet ist und dank dem sich die Maschine (M) zwischen Versatz- und Einzugspositionen in einer Ebene (EF) an der Vorderseite des Mastes (10) bewegen kann, so dass sich die Maschine in maximal eingezogener Position im Wesentlichen in der Verlängerung des Traktors befindet.

2. Trägervorrichtung gemäß Anspruch 1, die **dadurch gekennzeichnet ist, dass** das Hilfsmittel (31) ein Distanzstück oder eine Strebe ist.

3. Trägervorrichtung gemäß Anspruch 1, die **dadurch gekennzeichnet ist, dass** das Hilfsmittel (30) ein Pendelarm ist, der sich rund um die Welle (24) drehen kann und eine Strebe (31), vorzugsweise ein Rohr, eine Auflagefläche hinten (32) gegenüber dem Mast (10) und eine Auflagefläche vorne (33) für die Aufnahme des Arms (40) umfasst.

4. Trägervorrichtung gemäß Anspruch 3, die **dadurch gekennzeichnet ist, dass** der Pendelarm (30) vor oder hinter dem Mast (10) angebracht werden kann, wobei die Welle (24) einen vorderen Zapfen (24F) und einen hinteren Zapfen (24R) umfasst.

5. Vorrichtung gemäß Anspruch 4, die **dadurch gekennzeichnet ist, dass** die Welle (24; 24F, 24R) im oberen Bereich der Muffe 20 angeordnet ist.

6. Trägervorrichtung gemäß Ansprüchen 1 bis 5, die **dadurch gekennzeichnet ist, dass** die Muffe (20) Trägerelemente (22) umfasst, die eine Welle (71) tragen, wobei diese vorteilhaft an beiden Seiten der Trägerelemente (22) um einen Zapfen (71F) nach vorne und einen Zapfen (71R) nach hinten verlängert ist.

7. Trägervorrichtung gemäß Anspruch 6, die **dadurch gekennzeichnet ist, dass** die Trägerelemente (22) im oberen Bereich der Muffe (20) angeordnet sind.

8. Trägervorrichtung gemäß einem der Ansprüche 3 bis 7, die **dadurch gekennzeichnet ist, dass** die vordere Auflagefläche (33) so gestaltet ist, dass der Arm (40) in verschiedenen Höhen daran befestigt werden kann.

9. Trägervorrichtung gemäß einem der Ansprüche 3 bis 8, die **dadurch gekennzeichnet ist, dass** die hintere Auflagefläche (32) in etwa die Form eines umgedrehten Ts aufweist.

10. Trägervorrichtung gemäß Anspruch 9, die **dadurch gekennzeichnet ist, dass** im Endbereich rechts und links des Querbalkens des Ts der Auflagefläche eine Welle 72R bzw. 72L befestigt ist.

11. Trägervorrichtung gemäß Anspruch 10, die **dadurch gekennzeichnet ist, dass** das Betätigungsmittel (70) entweder mit den Wellen (71F, 72R) oder den Wellen (71R, 72L) verbunden ist, je nachdem ob der Pendelarm (30) vor oder hinter dem Mast (10) angeordnet ist.

12. Trägervorrichtung gemäß einem der Ansprüche 1 bis 11, die **dadurch gekennzeichnet ist, dass** der Haltearm (40) ein Verankerungsmittel (50) umfasst, an dem die Maschine (M) befestigt werden kann, wobei sich dieses Verankerungsmittel unter der Wirkung eines Schrägstellungsdruckzylinders (90) rund um eine Welle (43) drehen kann.

13. Trägervorrichtung gemäß Anspruch 12, die **dadurch gekennzeichnet ist, dass** der Druckzylinder (90) an einer Seite mit einer Welle (91) verbunden ist, die wiederum von Elementen (42) getragen wird, die fest mit dem Arm (40) verbunden sind und der an der anderen Seite mit einer Welle (92) verbunden ist, die von dem Verankerungsmittel (50) getragen wird, wobei sich besagter Druckzylinder (90) parallel zum Arm (40) erstreckt.

14. Trägervorrichtung gemäß Anspruch 13, die **dadurch gekennzeichnet ist, dass** das Verankerungsmittel (50) eine Bohrung (52) an beiden Seiten einer Mittelbohrung (53) aufweist, in der die Gelenkwelle (43) montiert ist, wobei das Verankerungsmittel (50) umkehrbar ist.

15. Trägervorrichtung gemäß einem der Ansprüche 12 bis 14, die **dadurch gekennzeichnet ist, dass** das Verankerungsmittel (50) gabelförmig ist.

16. Trägervorrichtung gemäß einem der Ansprüche 1 bis 15, die durch die Tatsache **gekennzeichnet** ist, dass die Ausrichtung der Maschine (M) bei der Schwenkung des Masts (10) oder des Arms (40) unverändert bleibt und das Verhältnis zwischen den Winkeln α und β der Gleichheit von α = β gehorcht.

17. Trägervorrichtung gemäß Anspruch 16, die **dadurch gekennzeichnet ist, dass** die Betätigungsmittel (60; 70) Doppelwirkzylinder sind, dass die Zuleitungen (66; 76) für das Einziehen der Zylinderstange miteinander verbunden sind und dass die Zuleitungen (65; 75) für das Ausfahren der Zylinderstange an einem gleichen Verteiler angeschlossen sind, der mit einem gleichen Bedienhebel bedient wird.

18. Trägervorrichtung gemäß Anspruch 17, die **dadurch gekennzeichnet ist, dass** die Zylinder (60; 70) identisch sind, so dass bei ihrer Betätigung der Ausziehhub der Stange des einen Zylinders genauso groß ist wie der Einziehhub der Stange des anderen Zylinders.

19. Trägervorrichtung gemäß Anspruch 17 oder 18, die **dadurch gekennzeichnet ist, dass** die Zylinder (60; 70) abwechselnd im Vergleich zum Mast (10) angebracht sind.

20. Trägervorrichtung gemäß Anspruch 17, 18 oder 19, die **dadurch gekennzeichnet ist, dass** bei senkrechter Position des Masts (10) die beiden Vielecke, die jeweils von der rechtwinkligen Projektion auf eine senkrecht zur Ebene (PM) stehende Ebene (E) des rechten Segments zwischen den beiden Gelenkmittelpunkten des Zylinders (60, 70), dieses gleichen rechten Segments auf die Achse 10A und den beiden rechten parallelen Projektionssegmenten selbst geformt werden, gleich sind.

21. Trägervorrichtung gemäß Anspruch 20, die **dadurch gekennzeichnet ist, dass** die geometrische Form der Vielecke entweder rechteckig oder quadratisch ist, wobei sich die Zylinder (60; 70) parallel zur Achse (10A) des Masts (10) erstrecken, oder dass diese Form nicht rechteckig oder quadratisch ist, wobei sich die Zylinder (60; 70) nicht parallel zur Achse (10A) erstrecken.

22. Trägervorrichtung gemäß einem der Ansprüche 17 bis 21, die **dadurch gekennzeichnet ist, dass** der Zylinder (60) an einer Seite mit einer Welle (61), die vom Träger (13) getragen wird, verbunden ist, und an der anderen Seite mit einer Welle (62), die von den fest mit dem Mast (10) verbundenen Trägerelementen (12) getragen wird.

23. Trägervorrichtung gemäß einem der Ansprüche 1 bis 22, die **dadurch gekennzeichnet ist, dass** eine Achse (81A) einer unteren Gelenkwelle (81) des Betätigungsmittels (80) seitlich um eine bestimmte Distanz von der Gelenkachse (11A) des Masts (10) verschoben ist, wobei die Wellen (81, 11) vom Träger des Masts (13) getragen werden.

24. Trägervorrichtung gemäß einem der Ansprüche 1 bis 23, die **dadurch gekennzeichnet ist, dass** eine Achse (82A) einer oberen Gelenkwelle (82) des Betätigungsmittels (80) seitlich um eine bestimmte Distanz von der Achse (10A) des Masts (10) verschoben ist.

25. Trägervorrichtung gemäß Anspruch 24, die **dadurch gekennzeichnet ist, dass** die obere Gelenkwelle (82) des Betätigungsmittels (80) von fest mit der Muffe (20) verbundenen Elementen (21) getragen wird.

26. Trägervorrichtung gemäß einem der Ansprüche 1 bis 25, die **dadurch gekennzeichnet ist, dass** sich das Betätigungsmittel (80) bei vertikaler Position des Masts (10) parallel zur Achse (10A) des besagten Masts erstreckt.

27. Trägervorrichtung gemäß einem der Ansprüche 1 bis 26, die **dadurch gekennzeichnet ist, dass** sich die Achse (10A) des Masts (10) und die Achsen der Zylinder (60; 80) auf einer gleichen Ebene befinden.

28. Trägervorrichtung gemäß einem der Ansprüche 1 bis 27, die **dadurch gekennzeichnet ist, dass** es sich bei dem Betätigungsmittel (80) um einen Doppelwirkzylinder handelt.
